# EUROPEAN PATENT SPECIFICATION

(11) **EP 3 178 669 B1**
(45) Date of publication and mention of the grant of the patent: **24.04.2019**
(21) Application number: 16199978.4
(22) Date of filing: 22.11.2016
(51) Int. Cl.: B60C 11/13, B60C 11/11, B60C 11/03

(54) **TIRE TREAD AND PNEUMATIC TIRE**
REIFENLAUFFLÄCHE UND LUFTREIFEN
BANDE DE ROULEMENT ET PNEUMATIQUE

(30) Priority: 08.12.2015 US 201514961930
(43) Date of publication of application: 14.06.2017
(73) Proprietor: The Goodyear Tire & Rubber Company, Akron, Ohio 44316 (US)
(72) Inventor: BORTOLET, Lionel Jean-Marie, F-54730 Gorcy (FR); LE, Phuoc Thuan, B-6717 Attert (BE)
(74) Representative: Kutsch, Bernd

(56) References cited:
- EP-A1- 2 263 888
- EP-A1- 2 374 636
- DE-A1-102008 037 497
- US-A1- 2010 258 228
- US-A1- 2012 318 419

## Description

### Field of the Invention

The present invention relates to a pneumatic tire. More particularly, the present invention is directed to a tire tread having a stone ejector.

### Background of the Invention

One problem encountered in the use of pneumatic tires, particularly for larger tires such as those used on bus or truck tires, is the entrapment of stones or debris in the tire tread. If a stone is trapped in the tread groove, it may result in the damage of the groove due to the repeated impact of the stone or debris against the groove sidewall. It is thus desired to have an improved tread design having an improved stone ejector.

EP-A-2 374 636 describes a motorcycle tire having a tread in accordance with the preamble of claim 1.

Tire treads comprising other structures that might serve as stone ejectors are described in DE 10 2008 037 497, US-A-2010/0258228, US-A-2012/0318419 and EP-A-2 263 888.

### Summary of the Invention

The invention relates to a tire tread in accordance with claim 1 and to a tire in accordance with claim 9.

Dependent claims refer to preferred embodiments of the invention.

Disclosed herein is a tread and a pneumatic tire having such a tread. The tread has a plurality of tread elements separated by at least one groove, the tread elements having a depth as determined from an initial tread surface and the base of the at least one groove. The tread has at least one stone ejector.

### Definitions

The following definitions are controlling for the disclosed invention.

"Axial" and "axially" are used herein to refer to lines or directions that are parallel to the axis of rotation of the tire.

"Centerplane (CP)" means the plane perpendicular to the tire's axis of rotation and passing through the center of its tread.

"Circumferential" means lines or directions extending along the perimeter of the surface of the annular tire parallel to the Centerplane CP and perpendicular to the axial direction.

"Radial" and "radially" are used to mean directions radially toward or away from the axis of rotation of the tire.

### Brief Description of the Drawings

The invention will be described by way of example and with reference to the accompanying drawings in which:
FIG. 1 is one plan view of a tire tread;

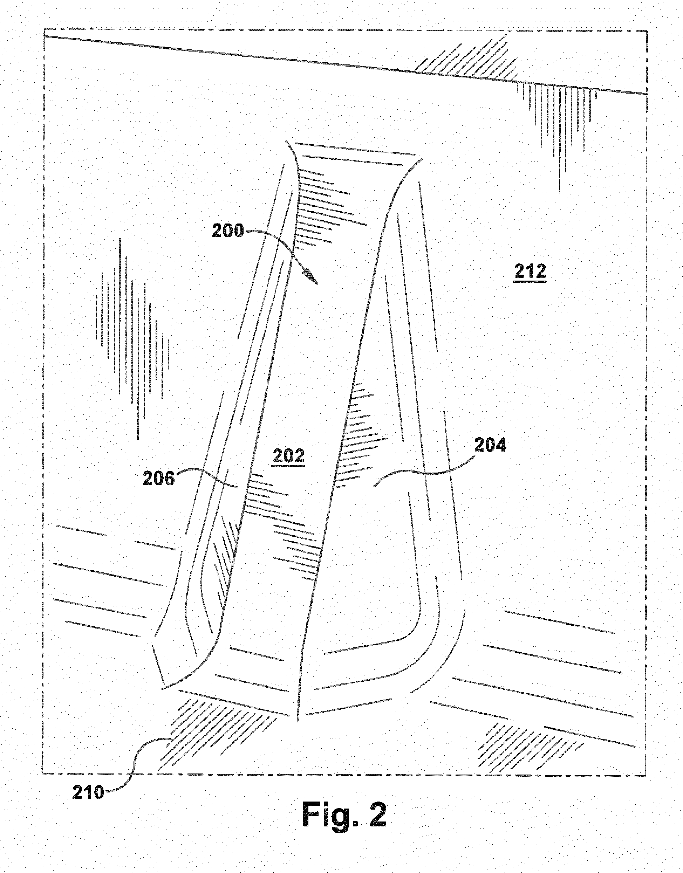

FIG. 2 is a plan view of a stone ejector in the tread;

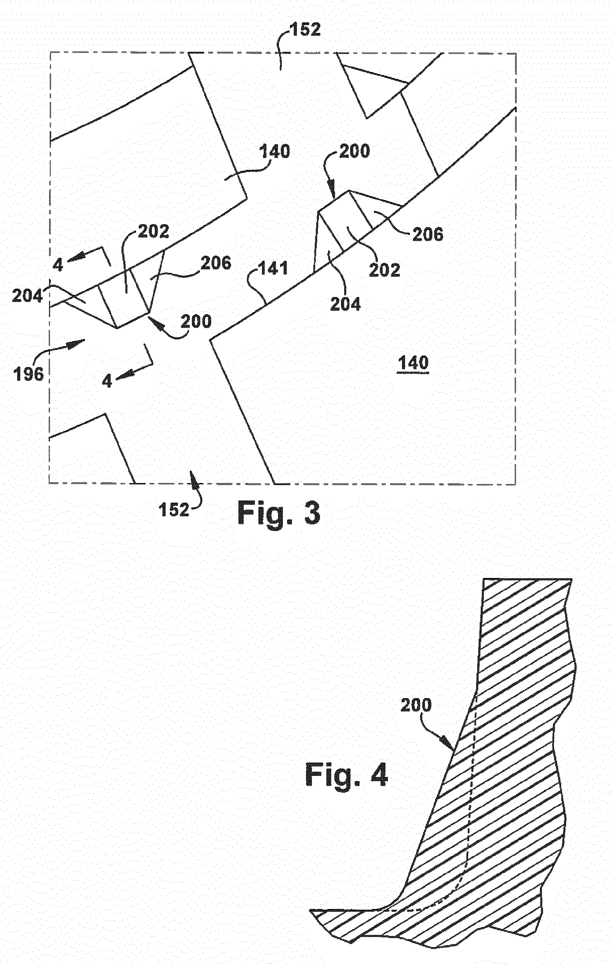

FIG. 3 is close up of Figure 1 showing the stone ejector; and
FIG. 4 is a side view of the stone ejector.

### Detailed Description of Example Embodiments of the Invention

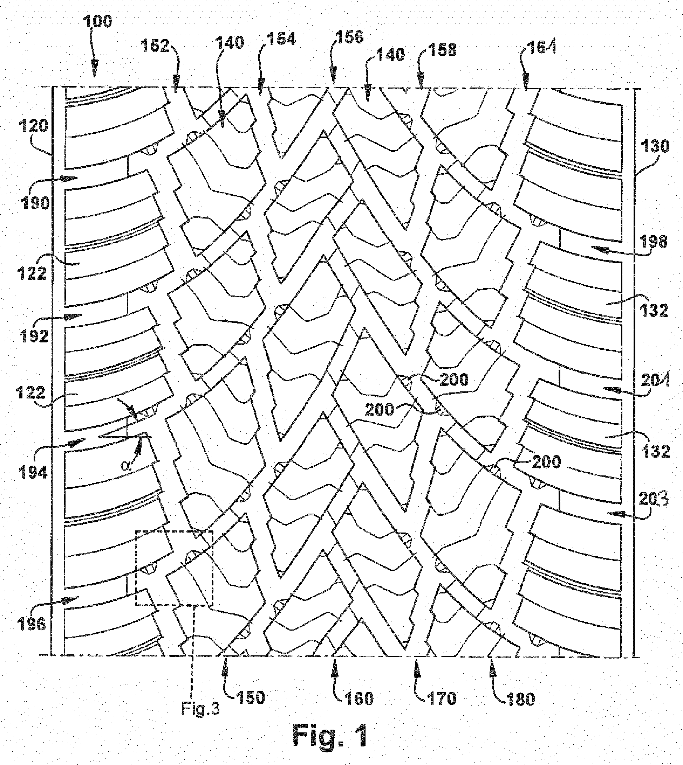

FIG. 1 illustrates a flat view of a portion of a tire tread 100. The tire tread may be symmetrical about a tread centerline or asymmetrical as shown. The tread 100 has a first lateral edge 120 and a second lateral edge 130. At each lateral edge 120, 130 there are a plurality of circumferentially aligned shoulder treads blocks 122, 132. Located between the shoulder tread blocks 122,132 are a plurality of tread blocks 140. As shown, the plurality of tread blocks 140 may be arranged in one or more circumferential rows 150, 160, 170, 180, although not required. The tread blocks are separated from each other by at least one, preferably a plurality of circumferential grooves 152, 154, 156, 158, 161, that may be straight, saw toothed or zigzaged in shape. The one or more circumferential grooves 152, 154, 156, 158, 161 preferably extend at an overall angle (disregarding a saw toothed of zizzag shaped substructure) of 0 degree with respect to a circumferential direction of the tire parallel to the centerplane. They may also extend at an overall angle of up to +/- 5 degrees with respect to a circumferential direction of the tire parallel to the centerplane.

There are also be one or more lateral grooves 190, 192, 194, 196, 198, 201, 203 that separate the tread blocks from each other in the lateral direction. The lateral grooves 190, 192, 194, 196, 198, 201, 203 form an angle α with respect to the axial direction in the range of 20° to 90°, preferebly 25° to 60° or 30° to 45°. Preferably, the lateral grooves are straight or arcuate shaped.

Preferably, each tread block has an overall rectangular or square shape, which may be asymmetrical with serrated edges as shown, or may be symmetrical with smooth edges.

Preferably, each tread block 140 has at least edge that has at least one stone ejector 200 projecting therefrom.

The stone ejector 200 used in accordance with the invention extends from a sidewall or tread block wall 141 of a the respective tread block 140 into a respective lateral groove 190, 192, 194, 196, 198, 201, 203 extending along this sidewall or tread block wall of the respective tread block.

The stone ejector 200 is preferably positioned along a tread block wall 141 located at the intersection of a first and second groove, for example, groove 152, and groove 196.

The stone ejector 200 is positioned along a tread block wall 141 and extends from said tread block wall 141 into a respective lateral groove 190, 192, 194, 196, 198, 201, 203 where the respective lateral groove 190, 192, 194, 196, 198, 201, 203 meets or intersects a respective circumferential groove 152, 154, 156, 158, 161

As shown, the stone ejector 200 is positioned along a tread block wall 141 opposite groove 152.

The stone ejector 200 acts as a shovel to move the stone or debris out of the groove 196 towards the opposite groove 152.

The width w1 of the respective opposite circumferential groove 152 is wider than the respective lateral groove 196 width w2. Preferably, w1 is in a range of from 110 to 200 % of w2, alternatively 110 to 150 %. In another embodiment, the width w1 is 20-50% wider than the width w2.

Thus the stone ejector 200 shovels the stone into a wider groove to facilitate ejection from the tread.

As shown, the stone ejector preferably has three sides 202, 204, 206 forming a main ramp 202 that preferably extends from the bottom of the groove 210 to the upper portion of the side of the groove. Preferably, the stone ejector 200 extends from the bottom of the groove 210 up to a position located in a range of from 60 to 100%, more preferably 70 to 90%, of the height of the respective groove 210 of an unworn tread or tire when measured from the groove bottom.

The stone ejector is preferably shaped like a nose that extends from the groove sidewall (face) 212. In one embodiment, the main ramp 202 forms an angle with the groove bottom in the range of from 20-80 degrees, more preferably in the range of from 30-60 degrees.

The main ramp 202 forms an angle with the groove bottom in the range of from 60-85 degrees, more preferably in the range of from 70-85 degrees.

While the stone ejector is illustrated in the context of one particular tread configuration, the stone ejector may be used as an element in other tread configurations and the use thereof in accordance with the present invention is not limited to the particular tread configuration illustrated.

## Claims

1. A tread for a tire, the tread (100) having a plurality of tread elements (140) separated by at least one groove (190, 192, 194, 196, 198, 201, 203, 152, 154, 156, 158, 161), the tread elements (140) having a depth as determined from an initial unworn tread surface and the base of the at least one groove, wherein the tread element (140) has a sidewall (212), wherein a stone ejector (200) has a first end positioned on the sidewall (212), and wherein the stone ejector (200) is positioned along a tread block wall (141) and extends from said tread block wall (141) into a lateral tread groove (190, 192, 194, 196, 198, 201, 203) where the respective lateral tread groove (190, 192, 194, 196, 198, 201, 203) meets or intersects a respective circumferential tread groove (152, 154, 156, 158, 161), wherein the width (w1) of the circumferential tread groove (152, 154, 156, 158, 161) is wider than the width (w2) of the lateral tread groove (190, 192, 194, 196, 198, 201, 203), and wherein the stone ejector (200) has at least one inclined wall or ramp (202) which extends from the groove bottom to the tread element sidewall (212), **characterized in that** the inclined wall or ramp (202) of the stone ejector (200) is angled in the range of from 60° to 85° relative to the groove bottom surface, and **in that** the lateral tread groove (190, 192, 194, 196, 198, 201, 203) forms an angle with respect to the axial direction in a range of from 20° to 90°.

2. The tread of claim 1 wherein the width (w1) of the circumferential tread groove (152, 154, 156, 158, 161) is in a range of from 110 to 200 % of the width (w2) of the lateral tread groove (152, 154, 156, 158, 161).

3. The tread of claim 1 wherein the width (w1) of the circumferential tread groove (152, 154, 156, 158, 161) is in a range of from 110 to 150 % of the width (w2) of the lateral tread groove (152, 154, 156, 158, 161).

4. The tread of claim 1 wherein the width (w1) of the circumferential tread groove (152, 154, 156, 158, 161) is 20-50 % wider than the width (w2) of the lateral tread groove (152, 154, 156, 158, 161).

5. The tread of at least one of the previous claims wherein the stone ejector (200) has three sides (202, 204, 206) extending into the lateral tread groove and forming the ramp.

6. The tread of at least one of the previous claims wherein the stone ejector (200) is shaped like a nose that extends from the lateral tread groove sidewall or face (212).

7. The tread of at least one of the previous claims wherein the stone ejector (200) has three or more side sides (202, 204, 206) forming the ramp that extends from the bottom of the respective lateral tread groove to an upper portion of the sidewall (212) of the respective lateral tread groove.

8. The tread of at least one of the previous claims wherein the stone ejector (200) extends from the bottom of the respective lateral tread groove up to a position located in a range of from 60 to 100%, preferably 70 to 90%, of the height of the respective lateral tread groove when measured from the bottom of the respective lateral tread groove of an unworn tire or tread (100).

9. A tire having a tread in accordance with at least one of the previous claims.

10. The tire of claim 9 wherein the tire is a pneumatic tire.

## Patentansprüche

1. Lauffläche für einen Reifen, wobei die Lauffläche (100) eine Vielzahl von Profilelementen (140) aufweist, die durch mindestens eine Rille (190, 192, 194, 196, 198, 201, 203, 152, 154, 156, 158, 161) getrennt sind, wobei die Profilelemente (140) eine Tiefe aufweisen, ermittelt ab einer ursprünglichen unabgenutzten Profiloberfläche und dem Grund der mindestens einen Rille, wobei das Profilelement (140) eine Seitenwand (212) aufweist, wobei ein Steinabweiser (200) ein erstes Ende aufweist, das an der Seitenwand (212) angeordnet ist, und wobei der Steinabweiser (200) entlang einer Profilblockwand (141) angeordnet ist und sich von der Profilblockwand (141) in eine laterale Profilrille (190, 192, 194, 196, 198, 201, 203) erstreckt, wo die jeweilige laterale Profilrille (190, 192, 194, 196, 198, 201, 203) auf eine jeweilige umfangsgerichtete Profilrille (152, 154, 156, 158, 161) trifft oder diese schneidet, wobei die Breite (w1) der umfangsgerichteten Profilrille (152, 154, 156, 158, 161) breiter als die Breite (w2) der lateralen Profilrille (190, 192, 194, 196, 198, 201, 203) ist, und wobei der Steinabweiser (200) mindestens eine geneigte Wand oder Rampe (202) aufweist, die sich von dem Rillengrund bis zu der Profilelement-Seitenwand (212) erstreckt, **dadurch gekennzeichnet, dass** die geneigte Wand oder Rampe (202) des Steinabweisers (200) im Bereich von 60° bis 85° bezüglich der Rillengrundoberfläche angewinkelt ist, und dass die laterale Profilrille (190, 192, 194, 196, 198, 201, 203) einen Winkel in Bezug zur axialen Richtung im Bereich von 20° bis 90° bildet.

2. Lauffläche nach Anspruch 1, wobei die Breite (w1) der umfangsgerichteten Profilrille (152, 154, 156, 158, 161) in einem Bereich von 110 bis 200% der Breite (w2) der lateralen Profilrille (152, 154, 156, 158, 161) liegt.

3. Lauffläche nach Anspruch 1, wobei die Breite (w1) der umfangsgerichteten Profilrille (152, 154, 156, 158, 161) in einem Bereich von 110 bis 150% der Breite (w2) der lateralen Profilrille (152, 154, 156, 158, 161) liegt.

4. Lauffläche nach Anspruch 1, wobei die Breite (w1) der umfangsgerichteten Profilrille (152, 154, 156, 158, 161) 20-50% breiter als die Breite (w2) der lateralen Profilrille (152, 154, 156, 158, 161) ist.

5. Lauffläche nach mindestens einem der vorhergehenden Ansprüche, wobei der Steinabweiser (200) drei Seiten (202, 204, 206) aufweist, die sich in die laterale Profilrille erstrecken und die Rampe bilden.

6. Lauffläche nach mindestens einem der vorhergehenden Ansprüche, wobei der Steinabweiser (200) wie eine Nase geformt ist, die sich von der lateralen Profilrillen-Seitenwand oder -Fläche (212) erstreckt.

7. Lauffläche nach mindestens einem der vorhergehenden Ansprüche, wobei der Steinabweiser (200) drei oder mehr Seitenflächen (202, 204, 206) aufweist, welche die Rampe bilden, die sich von dem Grund der jeweiligen lateralen Profilrille bis zu einem oberen Abschnitt der Seitenwand (212) der jeweiligen lateralen Profilrille erstreckt.

8. Lauffläche nach mindestens einem der vorhergehenden Ansprüche, wobei sich der Steinabweiser (200) vom Grund der jeweiligen lateralen Profilrille bis zu einer Position erstreckt, die sich in einem Bereich von 60 bis 100%, bevorzugt 70 bis 90%, der Höhe der jeweiligen lateralen Profilrille befindet, wenn gemessen ab dem Grund der jeweiligen lateralen Profilrille eines unabgenutzten Reifens bzw. Lauffläche (100).

9. Reifen, der eine Lauffläche gemäß mindestens einem der vorhergehenden Ansprüche aufweist.

10. Reifen nach Anspruch 9, wobei der Reifen ein Luftreifen ist.

## Revendications

1. Bande de roulement pour un bandage, la bande de roulement (100) possédant un certain nombre d'éléments de bande de roulement (140) séparés par au moins une rainure (190, 192, 194, 196, 198, 201, 203, 152, 154, 156, 158, 161), les éléments de bande de roulement (140) possédant une profondeur telle que déterminée à partir d'une surface initiale de bande de roulement non usée et de la base de ladite au moins une rainure ; dans laquelle l'élément de bande de roulement (140) possède une paroi latérale (212) ; et dans laquelle l'éjecteur de pierres (200) est disposé le long d'une paroi de pavé de bande de roulement (141) et s'étend à partir de ladite paroi de pavé de bande de roulement (141) jusque dans une rainure latérale de bande de roulement (190, 192, 194, 196, 198, 201, 203) à l'endroit où la rainure latérale respective de bande de roulement (190, 192, 194, 196, 198, 201, 203) rencontre ou coupe une rainure circonférentielle respective de bande de roulement (152, 154, 156, 158, 161) ; dans laquelle la largeur (w1) de la rainure circonférentielle de bande de roulement (152, 154, 156, 158, 161) est supérieure à la largeur (w2) de la rainure latérale de bande de roulement (190, 192, 194, 196, 198, 201, 203) ; et dans laquelle l'éjecteur de pierres (200) possède au moins une paroi inclinée ou une rampe (202) qui s'étend à partir de la base de rainures jusqu'à la paroi latérale (212) de l'élément de bande de roulement ; **caractérisée en ce que** la paroi inclinée ou la rampe (202) de l'éjecteur de pierres (200) formant un angle de 60° à 85° par rapport à la surface de la base de la rainure ; et **en ce que** la rainure latérale de bande de roulement (190, 192, 194, 196, 198, 201, 203) forme un angle par rapport à la direction axiale, dans une plage de 20° à 90°.

2. Bande de roulement selon la revendication 1, dans laquelle la largeur (w1) de la rainure circonférentielle de bande de roulement (152, 154, 156, 158, 161) se situe dans une plage de 110 à 200 % de la largeur (w2) de la rainure latérale de bande de roulement (152, 154, 156, 158, 161).

3. Bande de roulement selon la revendication 1, dans laquelle la largeur (w1) de la rainure circonférentielle de bande de roulement (152, 154, 156, 158, 161) se situe dans une plage de 110 à 150 % de la largeur (w2) de la rainure latérale de bande de roulement (152, 154, 156, 158, 161).

4. Bande de roulement selon la revendication 1, dans laquelle la largeur (w1) de la rainure circonférentielle de bande de roulement (152, 154, 156, 158, 161) est supérieure, à concurrence de 20 à 50 %, à la largeur (w2) de la rainure latérale de bande de roulement (152, 154, 156, 158, 161).

5. Bande de roulement selon au moins une des revendications précédentes, dans lequel l'éjecteur de pierres (200) possède trois côtés (202, 204, 206) s'étendant jusque dans la rainure latérale de bande de roulement et formant la rampe.

6. Bande de roulement selon au moins une des revendications précédentes, dans lequel l'éjecteur de pierres (200) possède une configuration en forme de nez qui s'étend à partir de la face ou de la paroi latérale (202) de la rainure latérale de bande de roulement.

7. Bande de roulement selon au moins une des revendications précédentes, dans lequel l'éjecteur de pierres (200) possède trois côtés ou plus (202, 204, 206) formant la rampe, qui s'étendent à partir de la base de la rainure latérale respective de bande de roulement jusqu'à une portion supérieure de la paroi latérale (212) de la rainure latérale respective de bande de roulement.

8. Bande de roulement selon au moins une des revendications précédentes, dans lequel l'éjecteur de pierres (200) s'étend à partir de la base de la rainure latérale respective de bande de roulement jusqu'à une position située dans une plage de 60 à 100 %, de préférence de 70 à 90 % de la hauteur de la rainure latérale respective de bande de roulement, lorsqu'on la mesure à partir de la base de la rainure latérale respective de bande de roulement d'une bande de roulement ou d'un bandage non usé (100).

9. Bandage possédant une bande de roulement selon au moins une des revendications précédentes.

10. Bandage selon la revendication 9, dans lequel le bandage est un bandage pneumatique.
